# EUROPÄISCHE PATENTANMELDUNG

(11) **EP 2 026 315 A2**
(43) Veröffentlichungstag der Anmeldung: **18.02.2009**
(21) Anmeldenummer: 08012180.9
(22) Anmeldetag: 05.07.2008
(51) Int. Cl.: G09B 23/28

(54) **Vorrichtung zur Erfassung der relativen Drehbewegungen des Fußes einer Testpuppe gegenüber dem Unterschenkel**

(30) Priorität: 25.07.2007 DE 102007035242
(71) Anmelder: IAV GmbH Ingenieurgesellschaft Auto und Verkehr, 10587 Berlin (DE)
(72) Erfinder: Deneke, Lutz, 38551 Ribbesbüttel (DE); Sontowski, Matthias, 09235 Burkhardtsdorf (DE); Weikard, Fritz, 38321 Denkte (DE)

(57) **Zusammenfassung**

Der vorliegenden Erfindung liegt die Aufgabe zu Grunde, eine Vorrichtung zur Erfassung der relativen Drehbewegungen des Fußes einer Testpuppe gegenüber dem Unterschenkel bereitzustellen, welche ein möglichst optimales Abbild des Fußgelenkes eines Fahrzeuginsassen ermöglicht. Zur Lösung dieser Aufgabe ist es erfindungsgemäß vorgesehen, den Fuß einer Testpuppe über ein Verbindungselement drehfest mit einer Kugel zu verbinden. Die Kugel ist in einer Kugelschale dreh- und schwenkbeweglich gelagert. Die Kugelschale ist aus zwei Teilen zusammengesetzt. Der erste Teil bildet den oberen Abschnitt der Kugelschale und ist drehfest mit dem Unterschenkel einer Testpuppe verbunden. Der zweite Teil bildet den unteren Abschnitt der Kugelschale und ist drehfest mit dem ersten Teil der Kugelschale verbunden. Auf diese Weise wird ein kompakter und stabiler Fußgelenkmechanismus bereitgestellt, der eine gute Annäherung an ein reales Fußgelenk eines Fahrzeuginsassen bietet.

## Beschreibung

Die vorliegende Erfindung betrifft eine Vorrichtung zur Erfassung der relativen Drehbewegungen des Fußes einer Testpuppe gegenüber dem Unterschenkel gemäß dem Oberbegriff des Hauptanspruches.

Im Rahmen der Entwicklung von Fahrzeugsicherheitssystemen werden verschiedene Versuchsreihen durchgeführt. Diese Versuchsreihen dienen der Bewertung des Zusammenwirkens der Fahrzeuginsassen mit den Elementen des Innenraumes, den Elementen zur Absorption von Energie und den Rückhaltesystemen bei verschiedenen simulierten Kollisionsunfällen. Dabei werden u. a. verschiedene Typen von Testpuppen eingesetzt. Diese Testpuppen unterliegen ständigen Optimierungsbemühungen. Die Optimierungsbemühungen sind darauf gerichtet, mittels der Testpuppen den Fahrzeuginsassen so gut wie möglich abzubilden. Insbesondere sollen jene Kräfte und Bewegungen simuliert werden, die auf den Fahrzeuginsassen bei Kollisionsunfällen wirken. Der Erfassung der relativen Drehbewegungen der Gliedmaßen einer Testpuppe wird dabei eine besondere Bedeutung beigemessen.

Vorbekannt aus der DE 103 11 230 A1 ist ein Gerät zur Ermittlung der relativen Drehwinkel des Fußes einer Testpuppe gegenüber dem Unterschenkel bei einer Unfallsimulation. Zur Simulation der Funktion eines menschlichen Fußgelenkes ist der Fuß einer Testpuppe über ein Verbindungselement drehfest mit einer Kugel verbunden. Die Kugel ist in einer in dem Unterschenkel einer Testpuppe angeordneten Kugelschale dreh- und schwenkbeweglich gelagert. Zum Begrenzen der relativen Dreh- und Schwenkbewegungen des Fußes einer Testpuppe gegenüber dem Unterschenkel sind im Bereich der Kugelschale Anschläge vorgesehen. Durch Anordnung eines optischen Systems werden die relativen Drehwinkel des Fußes einer Testpuppe gegenüber dem Unterschenkel um die x-, y- und z-Achse bezogen auf ein gedachtes Koordinatensystem, das im geometrischen Zentrum der Kugel seinen Ursprung hat, über die Dauer einer Unfallsimulation ermittelt. Das optische System besteht aus einer Lichtquelle, einer Blende, einem sphärischen Spiegel, der an der Kugel angeordnet ist und aus einem Quadrantensensor mit einer vorgeordneten Linse. Anhand des auf dem Quadrantensensor abgebildeten Lichtmusters der Blende ist es möglich, während einer Unfallsimulation die durch die äußeren Kräfte hervorgerufenen relativen Drehungen und Kippungen des Fußes einer Testpuppe gegenüber dem Unterschenkel zu ermitteln. Durch die Anordnung des optischen Systems im Bereich des Fußgelenkes einer Testpuppe kann die gesamte Sensorik zum Ermitteln der relativen Drehwinkel des Fußes gegenüber dem Unterschenkel im Unterschenkel der Testpuppe untergebracht werden, so dass bei einer Unfallsimulation keine äußeren Beeinträchtigungen der Bewegungen durch das Gerät zur Ermittlung der relativen Drehwinkel des Fußes gegenüber dem Unterschenkel einer Testpuppe erfolgen.

Nachteilig bei diesem Gerät ist der erforderliche hohe finanzielle Aufwand, welcher bei der Bereitstellung, dem Einsatz und dem Erhalt des außerdem sehr komplexen und filigranen Gerätes zwangsläufig entsteht.

Weiterhin vorbekannt aus dem Dokument **"CERTIFICATION PROCEDURE FOR THE THOR-FLX/HYBRID III RETROFIT VERSION 1.0"** des National Highway Traffic Safety Administration Vehicle Research and Test Center vom September 2004 ist eine komplexe Vorrichtung, welche den Unterschenkel einer Testpuppe repräsentiert und u. a. über eine untergeordnete Vorrichtung zur Erfassung der relativen Drehbewegungen des Fußes einer Testpuppe gegenüber dem Unterschenkel verfügt. Diese untergeordnete Vorrichtung ermöglicht neben der Verbindung des Unterschenkels mit dem Fuß eine Auflösung der komplexen relativen Drehbewegungen des Fußes einer Testpuppe gegenüber dem Unterschenkel in einzelne Drehbewegungen um die x-, y- und z-Achse bezogen auf ein gedachtes Koordinatensystem, das im geometrischen Zentrum der Kugel seinen Ursprung hat. Die Auflösung der komplexen relativen Drehbewegungen des Fußes gegenüber dem Unterschenkel wird mittels einer kardanischen Aufhängung des Fußes an dem Unterschenkel erreicht, wobei diese kardanische Aufhängung das Fußgelenk repräsentiert. An den einzelnen Drehachsen der kardanischen Aufhängung sind Potentiometer zur Erfassung des Drehwinkels um die x-, y- und z-Achse angeordnet.

Es ist bei dieser Vorrichtung von Nachteil, dass durch die kardanische Aufhängung des Fußes an dem Unterschenkel kein optimales Abbild des Fußgelenkes eines Fahrzeuginsassen erreicht wird. Vielmehr wird ein wenig kompakter und instabiler Fußgelenkmechanismus bereitgestellt, der lediglich eine grobe Annäherung an ein reales Fußgelenk bietet.

### Aufgabe

Der vorliegenden Erfindung liegt die Aufgabe zu Grunde, eine Vorrichtung zur Erfassung der relativen Drehbewegungen des Fußes einer Testpuppe gegenüber dem Unterschenkel bereitzustellen, welche die oben genannten Nachteile nicht aufweist.

### Lösung

Diese Aufgabe wird erfindungsgemäß durch die kennzeichnenden Merkmale der Patentansprüche 1 bis 19 gelöst.

Erfindungsgemäß vorteilhaft ist der Fuß einer Testpuppe über ein Verbindungselement drehfest mit einer Kugel verbunden. Die Kugel ist in einer Kugelschale dreh- und schwenkbeweglich gelagert. Die Kugelschale ist aus zwei Teilen zusammengesetzt. Der erste Teil bildet den oberen Abschnitt der Kugelschale und ist drehfest mit dem Unterschenkel einer Testpuppe verbunden. Der zweite Teil bildet den unteren Abschnitt der Kugelschale und ist drehfest mit dem ersten Teil der Kugelschale verbunden. Auf diese Weise wird ein kompakter und stabiler Fußgelenkmechanismus bereitgestellt, der eine gute Annäherung an ein reales Fußgelenk eines Fahrzeuginsassen bietet.

Es ist weiterhin vorteilhaft, dass ohne Beeinträchtigung der Funktionalität des nunmehr erreichten realitätsnahen Fußgelenkes ein Messflansch vorgesehen ist, der den ersten Teil der Kugelschale drehbeweglich umschließt. Der Messflansch liegt mit den zwei Teilen der Kugelschale auf einer gemeinsamen Achse.

Weiterhin stehen erfindungsgemäß vorteilhaft die Kugel und der Messflansch in Wirkverbindung mit Mitteln zur Erfassung von Drehbewegungen.

Zunächst ist der erste Teil der Kugelschale an seinem Umfang mit mindestens zwei Durchbrüchen versehen, welche im rechten Winkel zueinander angeordnet sind, d. h. die Mittellinien der Durchbrüche sind senkrecht zueinander angeordnet. Diese Durchbrüche erstrecken sich über einen Winkelbereich in Bezug auf ein gedachtes Koordinatensystem, das im geometrischen Zentrum der Kugel seinen Ursprung hat, am Umfang des ersten Teils der Kugelschale und sind bevorzugt als Langlöcher ausgeführt. An dem ersten Teil der Kugelschale ist weiterhin drehfest ein Abtastkopf angeordnet. Dieser Abtastkopf erstreckt sich vorzugsweise in Richtung des Fußes der Testpuppe.

Weiterhin ist der zweite Teil der Kugelschale drehfest mit dem ersten Teil der Kugelschale verbunden. Der zweite Teil der Kugelschale ist an der dem Fuß der Testpuppe zugewandten Seite mit einem Durchbruch versehen. Das sich an die Kugel anschließende Verbindungselement durchdringt dabei den zweiten Teil der Kugelschale durch diesen Durchbruch. Der zweite Teil der Kugelschale realisiert mit dem Durchbruch den Anschlag für das sich an die Kugel anschließende Verbindungselement bei einer relativen Drehbewegung des Fußes gegenüber dem Unterschenkel. Der zweite Teil der Kugelschale ist bevorzugt von einer aus elastischem Material bestehenden Ummantelung umschlossen. Diese Ummantelung dient der Anschlagdämpfung, d. h. der Verringerung des Geräusches ohne wesentliche Beeinflussung der relativen Drehbewegungen des Fußes gegenüber dem Unterschenkel.

Der Messflansch hat bevorzugt die Form eines Hohlzylinders und ist mit seinem Innenumfang auf mindestens einem Abschnitt des Außenumfanges der Kugelschale drehbeweglich geführt. Der Messflansch weist auf der dem Unterschenkel der Testpuppe zugewandten Seite an seinem Außenumfang eine Anzahl bevorzugt regelmäßig verteilter Winkelteilungen auf. Diese Winkelteilungen sind vorzugsweise als optoelektronisch abtastbare Hell-Dunkel-Felder ausgeführt.

Der an dem ersten Teil der Kugelschale drehfest angeordnete Abtastkopf basiert vorzugsweise auf einem optoelektronischen Wirkprinzip. Der Abtastkopf ist derart zu den am Außenumfang des Messflansches verteilten Winkelteilungen ausgerichtet, dass eine Abtastung der Winkelteilungen und somit ein Rückschluss auf die relative Drehbewegung des Fußes einer Testpuppe gegenüber dem Unterschenkel um die gemeinsame Achse der zwei Teile der Kugelschale und des Messflansches möglich ist.

Die Kugel ist mit mindestens zwei Nuten versehen. Diese Nuten erstrecken sich in Richtung des sich an der Kugel anschließenden Verbindungselementes über einen definierten Winkelbereich am Umfang der Kugel bezogen auf ein gedachtes Koordinatensystem mit dem Ursprung im geometrischen Zentrum der Kugel und sind im rechten Winkel zueinander angeordnet. In die Nuten greifen Mittel zur Erfassung von Drehbewegungen in Richtung des geometrischen Zentrums der Kugel ein. Die Mittel zur Erfassung von Drehbewegungen sind ebenfalls im rechten Winkel zueinander angeordnet und greifen formschlüssig in die Nuten ein.

Die Mittel zur Erfassung von Drehbewegungen, welche in die Nuten eingreifen, sind vorzugsweise potentiometrische Drehwinkelsensoren, jeweils bestehend aus einem Gehäuse und einer Übertragungswelle. Weiterhin können die Mittel zur Erfassung von Drehbewegungen auch auf einem kapazitiven, magnetischen oder induktiven Messprinzip basieren. Der Querschnitt der Übertragungswelle ist nicht ausschließlich kreisförmig, sondern ist ausgehend von einem kreisförmigen Querschnitt in Richtung des Eingriffs der Übertragungswelle in die entsprechende Nut in der Kugel vorzugsweise mit einem rechteckigen Querschnitt ausgeführt. Dabei ist die Breite des rechteckigen Querschnitts derart gewählt, dass ein Eingriff in die entsprechende Nut in der Kugel bzw. ein formschlüssiger Eingriff der Übertragungswellen in die entsprechende Nut in der Kugel sichergestellt ist.

Die Übertragungswellen der Mittel zur Erfassung von Drehbewegungen durchdringen durch Bohrungen und/oder Durchbrüche den Messflansch und sind um die eigene Achse drehbeweglich. Das Gehäuse eines der Mittel zur Erfassung von Drehbewegungen ist drehfest mit dem Messflansch verbunden. Das Gehäuse des weiteren Mittels zur Erfassung von Drehbewegungen ist drehfest mit dem zweiten Teil der Kugelschale verbunden, so dass es Ausgleichsbewegungen ausführen kann. Die Übertragungswellen der Mittel zur Erfassung von Drehbewegungen durchdringen weiterhin den ersten Teil der Kugelschale durch die am Umfang des ersten Teils der Kugelschale vorgesehenen Durchbrüche.

Alternativ kann das Prinzip der Erfassung der relativen Drehbewegung des Fußes einer Testpuppe gegenüber dem Unterschenkel um die gemeinsame Achse der zwei Teile der Kugelschale und des Messflansches auch auf einem resistiven, kapazitiven, magnetischen oder induktiven Messprinzip basieren. Dazu sind die oben genannten, am Außenumfang des Messflansches verteilten Winkelteilungen und der Abtastkopf auf das jeweilige zu Grunde liegende Winkel- bzw. Wegmessverfahren abzustimmen.

Die oben beschriebenen Mittel zur Erfassung von Drehbewegungen sind mit Mitteln zur Datenerfassung verbunden, welche eine Erfassung der einzelnen Drehbewegungen in Abhängigkeit der Zeit über die Dauer einer Unfallsimulation ermöglichen.

Die erfindungsgemäße Vorrichtung wirkt bei einer Unfallsimulation in vorteilhafter Weise derart, dass die gekoppelte Drehbewegung zwischen Fuß und Unterschenkel einer Testpuppe, verursacht durch äußere Kräfte, in einzelne Drehbewegungen um die x-, y- und z-Achse des gedachten Koordinatensystems, das im geometrischen Zentrum der Kugel seinen Ursprung hat, aufgelöst wird.

Die Auflösung der gekoppelten Drehbewegung zwischen Fuß und Unterschenkel einer Testpuppe in einzelne Drehbewegungen um die x-, y- und z-Achse des gedachten Koordinatensystems, das im geometrischen Zentrum der Kugel seinen Ursprung hat, erfolgt vorteilhaft über die Kugel, die mit dem Messflansch und den Mitteln zur Erfassung von Drehbewegungen in Wirkverbindung steht.

Dadurch, dass
- der Fuß einer Testpuppe über ein Verbindungselement drehfest mit einer Kugel verbunden ist,
- die Kugel in einer Kugelschale dreh- und schwenkbeweglich gelagert ist,
- der erste Teil der Kugelschale drehfest mit dem Unterschenkel einer Testpuppe verbunden ist,
- die Kugel mit zwei Nuten versehen ist, welche im rechten Winkel zueinander angeordnet sind,
- der Messflansch drehbeweglich den ersten Teil der Kugelschale umschließt,
- die Übertragungswellen der Mittel zur Erfassung von Drehbewegungen den Messflansch durchdringen, im rechten Winkel zueinander angeordnet und um ihre eigene Achse drehbeweglich sind,
- die Übertragungswellen der Mittel zur Erfassung von Drehbewegungen den ersten Teil der Kugelschale durch die am Umfang des ersten Teils der Kugelschale vorgesehenen Durchbrüche durchdringen,
- die Übertragungswellen der Mittel zur Erfassung von Drehbewegungen formschlüssig in die Nuten eingreifen,
- die Gehäuse der Mittel zur Erfassung von Drehbewegungen drehfest mit dem Messflansch und dem zweiten Teil der Kugelschale verbunden sind,
wird die gekoppelte Drehbewegung zwischen Fuß und Unterschenkel einer Testpuppe, verursacht durch äußere Kräfte, in einzelne Drehbewegungen um die x- und y-Achse des gedachten Koordinatensystems, das im geometrischen Zentrum der Kugel seinen Ursprung hat, aufgelöst.

Weiterhin wird dadurch, dass die Kugel in Wirkverbindung mit dem Messflansch und mit Mitteln zur Erfassung von Drehbewegungen steht, die Drehbewegung des Fußes relativ zum Unterschenkel einer Testpuppe um die z-Achse des gedachten Koordinatensystems aus der gekoppelten Drehbewegung, verursacht durch äußere Kräfte, aufgelöst.

Die Übertragung einer relativen Drehbewegung des Fußes gegenüber dem Unterschenkel um die z-Achse des gedachten Koordinatensystems, das im geometrischen Zentrum der Kugel seinen Ursprung hat, erfolgt ausgehend von der Kugel, die mit dem Verbindungselement drehfest verbunden ist, wobei das Verbindungselement wiederum mit dem Fuß drehfest verbunden ist, über die Übertragungswelle des einen Mittels zur Erfassung der Drehbewegungen um die x- oder y-Achse des gedachten Koordinatensystems, welches durch eine Bohrung in dem Messflansch geführt ist, auf den Messflansch.

Für den Fall, dass die auf den Fuß einer Testpuppe wirkenden äußeren Kräfte ausschließlich eine relative Drehbewegung des Fußes gegenüber dem Unterschenkel um die z-Achse des gedachten Koordinatensystems, das im geometrischen Zentrum der Kugel seinen Ursprung hat, verursachen, dient das eine Mittel zur Erfassung der Drehbewegungen um die x- oder y-Achse des gedachten Koordinatensystems, welches durch eine Bohrung in dem Messflansch geführt ist, lediglich der Übertragung der relativen Drehbewegung des Fußes gegenüber dem Unterschenkel um die z-Achse des gedachten Koordinatensystems auf den Messflansch.

### Ausführungsbeispiel

Beispielhaft wird hier die Anwendung der erfindungsgemäßen Vorrichtung dargestellt. In den dazugehörigen Figuren zeigen:
- Fig. 1:: Ansicht der einzelnen Elemente der erfindungsgemäßen Vorrichtung,
- Fig. 2:: Ansicht eines Details der erfindungsgemäßen Vorrichtung,
- Fig. 3:: Ansicht der gesamten erfindungsgemäßen Vorrichtung,
- Fig. 4:: weitere Ansicht der gesamten erfindungsgemäßen Vorrichtung.

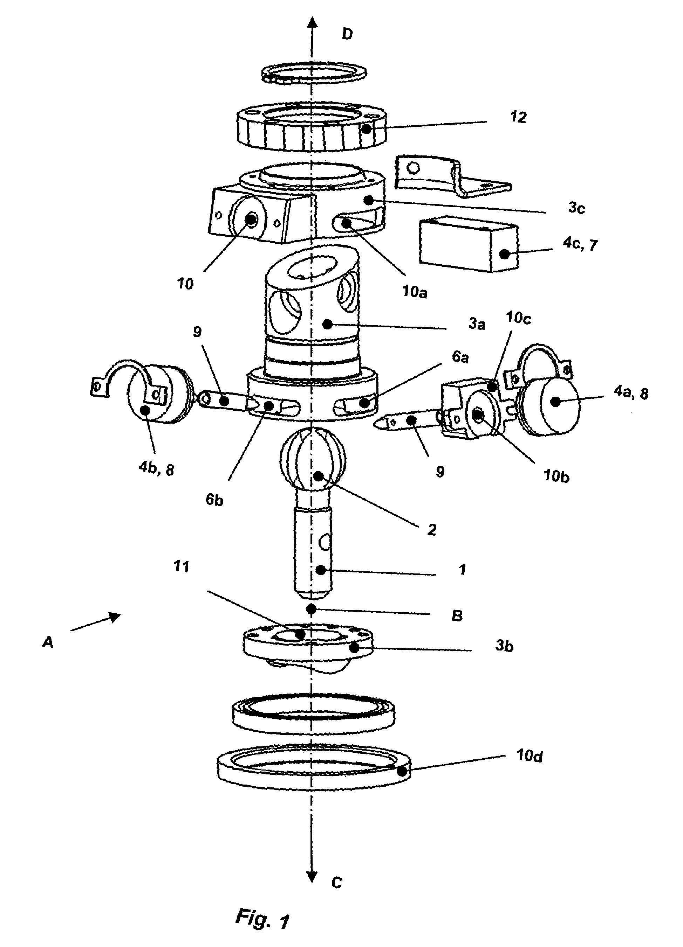

Wie in **Figur 1** dargestellt, verfügt die erfindungsgemäße Vorrichtung **A** über ein Verbindungselement **1,** das drehfest mit einer Kugel **2** verbunden ist. Das Verbindungselement **1** ist ebenfalls drehfest mit dem Fuß einer Testpuppe verbunden. Der Fuß einer Testpuppe ist in den **Figuren 1** bis **3** nicht dargestellt. Die Kugel **2** ist in einer Kugelschale **3** dreh- und schwenkbeweglich gelagert. Die Kugelschale **3** ist aus zwei Teilen **3a** und **3b** zusammengesetzt.

Der erste Teil der Kugelschale **3a** bildet den oberen Abschnitt der Kugelschale **3** und ist drehfest mit dem Unterschenkel einer Testpuppe verbunden. Der Unterschenkel einer Testpuppe ist in den **Figuren 1** bis **3** nicht dargestellt. Der zweite Teil der Kugelschale **3b** bildet den unteren Abschnitt der Kugelschale **3** und ist drehfest mit dem ersten Teil der Kugelschale **3a** verbunden. Ein Messflansch **3c** umschließt drehbeweglich den ersten Teil der Kugelschale **3a.** Die zwei Teile **3a** und **3b** der Kugelschale **3** und der Messflansch **3c** liegen auf einer gemeinsamen Achse **B.**

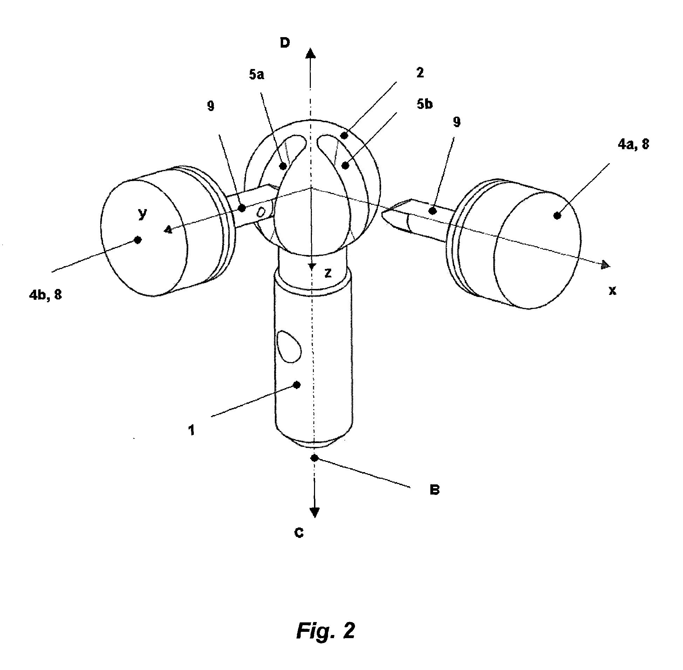

Die Kugel **2** und der Messflansch **3c** stehen in Wirkverbindung mit Mitteln zur Erfassung von Drehbewegungen **4a, 4b** und **4c.** Dazu ist zunächst die Kugel **2** mit mindestens zwei Nuten **5a** und **5b** versehen, siehe **Figur 2****.** Diese Nuten **5a** und **5b** erstrecken sich in Richtung des sich an der Kugel **2** anschließenden Verbindungselementes **1** über einen definierten Winkelbereich am Umfang der Kugel **2,** bezogen auf ein gedachtes Koordinatensystem, das im geometrischen Zentrum der Kugel **2** seinen Ursprung hat und sind im rechten Winkel zueinander angeordnet. In die Nuten **5a** und **5b** greifen Mittel zur Erfassung von Drehbewegungen **4a** und **4b** in Richtung des geometrischen Zentrums der Kugel **2** ein. Die Mittel zur Erfassung von Drehbewegungen **4a** und **4b** sind ebenfalls im rechten Winkel zueinander angeordnet und greifen formschlüssig in die Nuten **5a** und **5b** ein.

Gemäß **Figur 1** ist der erste Teil der Kugelschale **3a** an seinem Umfang mit mindestens zwei Durchbrüchen **6a** und **6b** versehen, welche im rechten Winkel zueinander angeordnet sind, d. h. die Mittellinien der Durchbrüche **6a** und **6b** sind senkrecht zueinander angeordnet. Die Durchbrüche **6a** und **6b** erstrecken sich über einen Winkelbereich, in Bezug auf ein gedachtes Koordinatensystem, das im geometrischen Zentrum der Kugel **2** seinen Ursprung hat, am Umfang des ersten Teils der Kugelschale **3a** und sind als Langlöcher ausgeführt. Die Durchbrüche **6a** und **6b** begrenzen im Zusammenhang mit den Übertragungswellen **9** der Mittel zur Erfassung von Drehbewegungen **4a** und **4b** die Drehbewegung des Fußes gegenüber dem Unterschenkel um die z-Achse des gedachten Koordinatensystems, das im geometrischen Zentrum der Kugel **2** seinen Ursprung hat, wobei die Richtung der z-Achse mit der Richtung der gemeinsamen Achse **B** der zwei Teile der Kugelschale **3a, 3b** und des Messflansches **3c** übereinstimmt. An dem ersten Teil der Kugelschale **3a** ist weiterhin drehfest ein Abtastkopf **7,** als Mittel zur Erfassung von Drehbewegungen **4c,** angeordnet. Der Abtastkopf **7** erstreckt sich vorzugsweise in Richtung des Fußes der Testpuppe.

Die Mittel zur Erfassung von Drehbewegungen **4a und 4b,** welche in die Nuten **5a** und **5b** eingreifen, sind vorzugsweise potentiometrische Drehwinkelsensoren, jeweils bestehend aus einem Gehäuse **8** und einer Übertragungswelle **9.**

Die Übertragungswelle **9** des Mittels zur Erfassung von Drehbewegungen **4b** ist in einer Bohrung **10** in dem Messflansch **3c** geführt und um ihre eigene Achse drehbeweglich. Die Übertragungswelle **9** des Mittels zur Erfassung von Drehbewegungen **4a** durchdringt den Messflansch **3c** durch einen als Langloch ausgeführten Durchbruch **10a** und ist um ihre eigene Achse drehbeweglich. Ferner ist die Übertragungswelle **9** des Mittels zur Erfassung von Drehbewegungen **4a** in einer Bohrung **10b** in einem Befestigungsblock **10c** geführt. Der Befestigungsblock **10c** ist weiterhin an einem Lagerring **10d** angeordnet. Der Lagerring **10d** ist wiederum mit dem zweiten Teil der Kugelschale **3b** drehfest verbunden. Das Gehäuse **8** des Mittels zur Erfassung von Drehbewegungen **4b** ist drehfest mit dem Messflansch **3c** verbunden. Das Gehäuse **8** des Mittels zur Erfassung von Drehbewegungen **4a** ist drehfest mit dem Befestigungsblock **10c** verbunden. Die Übertragungswellen **9** der Mittel zur Erfassung von Drehbewegungen **4a** und **4b** durchdringen den ersten Teil der Kugelschale **3a** durch die am Umfang des ersten Teils der Kugelschale **3a** vorgesehenen Durchbrüche **6a** und **6b.**

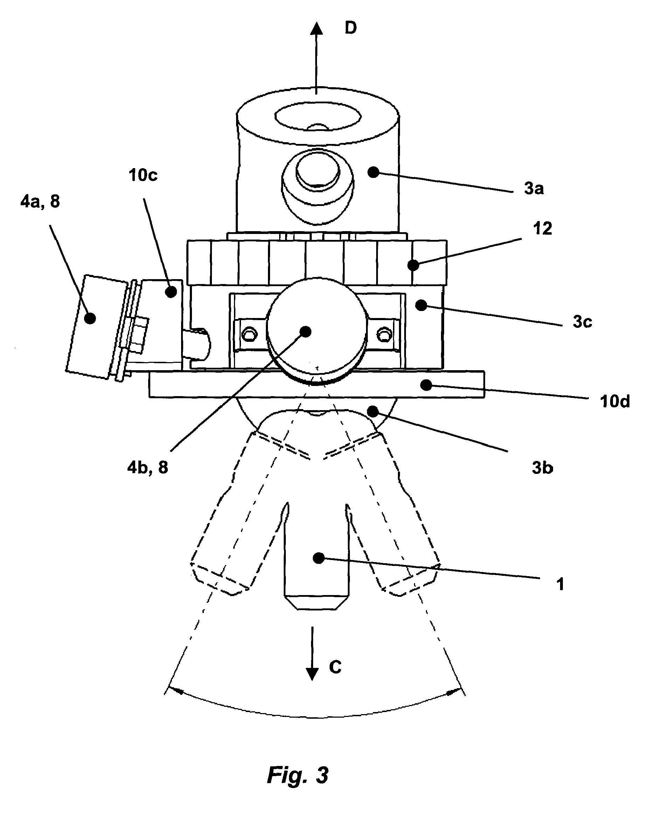

Der zweite Teil der Kugelschale **3b** ist drehfest mit dem ersten Teil der Kugelschale **3a** verbunden, beispielsweise mittels einer Schraubenverbindung, siehe **Figur 3****.** Weiterhin ist der zweite Teil der Kugelschale **3b** an der dem Fuß der Testpuppe zugewandten Seite **C** mit einem Durchbruch **11** versehen, siehe **Figur 1****.** Das sich an der Kugel **2** anschließende Verbindungselement **1** durchdringt den zweiten Teil der Kugelschale **3b** durch den Durchbruch **11.** Der zweite Teil der Kugelschale **3b** realisiert mit dem Durchbruch **11** den Anschlag für das sich an die Kugel **2** anschließende Verbindungselement **1** bei einer relativen Drehbewegung des Fußes gegenüber dem Unterschenkel. Der zweite Teil der Kugelschale **3b** ist bevorzugt von einer aus elastischem Material bestehenden Ummantelung umschlossen.

Der Messflansch **3c** weist auf der dem Unterschenkel der Testpuppe zugewandten Seite **D** an seinem Außenumfang eine Anzahl bevorzugt regelmäßig verteilter Winkelteilungen **12** auf. Die Winkelteilungen **12** sind vorzugsweise als optoelektronisch abtastbare Hell-Dunkel-Felder ausgeführt.

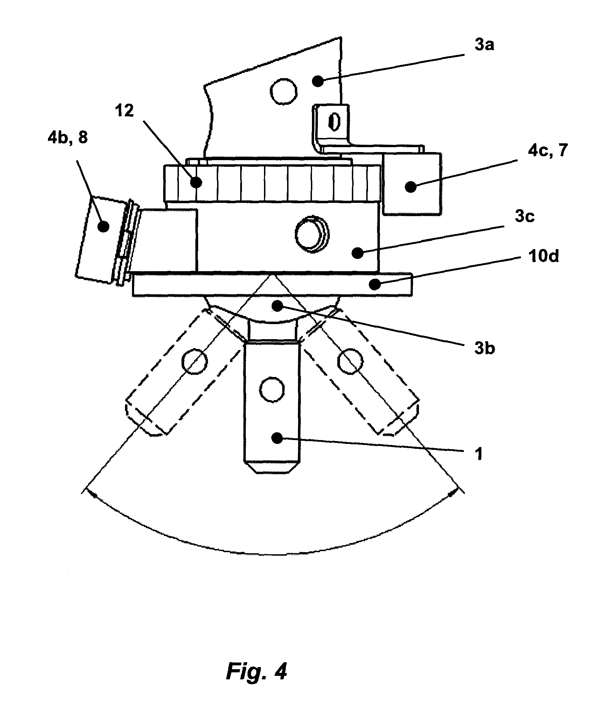

Der an dem ersten Teil der Kugelschale **3a** drehfest angeordnete Abtastkopf **7,** als Mittel zur Erfassung von Drehbewegungen **4c,** ist ein Winkel- bzw. Wegaufnehmer, der vorzugsweise auf einem optoelektronischen Messprinzip basiert. Gemäß **Figur 4** ist der Abtastkopf **7** derart zu den am Außenumfang des Messflansches **3c** verteilten Winkelteilungen **12** ausgerichtet, dass eine Abtastung der Winkelteilungen **12** und somit ein Rückschluss auf die relative Drehbewegung des Fußes einer Testpuppe gegenüber dem Unterschenkel um die gemeinsame Achse **B** der zwei Teile der Kugelschale **3a, 3b** und des Messflansches **3c**, deren Richtung mit der Richtung der z-Achse des gedachten Koordinatensystems, das im geometrischen Zentrum der Kugel **2** seinen Ursprung hat, übereinstimmt, möglich ist.

Die erfindungsgemäße Vorrichtung **A** wirkt bei einer Unfallsimulation in vorteilhafter Weise derart, dass die gekoppelte Dreh- und Schwenkbewegung des Fußes gegenüber dem Unterschenkel, verursacht durch die auf den Fuß einer Testpuppe wirkenden äußeren Kräfte, in einzelne Drehbewegungen, entsprechend einem gedachten Koordinatensystem, das im geometrischen Zentrum der Kugel **2** seinen Ursprung hat, um die x-, y- und z-Achse aufgelöst wird.

Die Auflösung der gekoppelten Dreh- und Schwenkbewegung des Fußes gegenüber dem Unterschenkel in einzelne Drehbewegungen um die x-, y- und z-Achse erfolgt vorteilhaft über die Kugel **2,** die mit dem Messflansch **3c** und den Mitteln zur Erfassung von Drehbewegungen **4a, 4b** und **4c** in Wirkverbindung steht.

Dadurch, dass
- der Fuß einer Testpuppe über ein Verbindungselement **1** drehfest mit einer Kugel **2** verbunden ist,
- die Kugel **2** in einer Kugelschale **3** dreh- und schwenkbeweglich gelagert ist,
- der erste Teil der Kugelschale **3a** drehfest mit dem Unterschenkel einer Testpuppe verbunden ist,
- die Kugel **2** mit zwei Nuten **5a** und **5b** versehen ist, welche im rechten Winkel zueinander angeordnet sind,
- der Messflansch **3c** drehbeweglich den ersten Teil der Kugelschale **3a** umschließt und die zwei Teile **3a** und **3b** der Kugelschale **3** und der Messflansch **3c** auf einer gemeinsamen Achse **B** liegen,
- die Übertragungswellen **9** der Mittel zur Erfassung von Drehbewegungen **4a** und **4b** den Messflansch **3c** durch den Druchbruch **10a** und die Bohrung **10** durchdringen, im rechten Winkel zueinander angeordnet und um ihre eigene Achse drehbeweglich sind,
- die Übertragungswellen **9** der Mittel zur Erfassung von Drehbewegungen **4a** und **4b** den ersten Teil der Kugelschale **3a** durch die am Umfang des ersten Teils der Kugelschale **3a** vorgesehenen Durchbrüche **6a** und **6b** durchdringen,
- die Übertragungswellen **9** der Mittel zur Erfassung von Drehbewegungen **4a** und **4b** formschlüssig in die Nuten **5a** und **5b** eingreifen,
- die Gehäuse **8** der Mittel zur Erfassung von Drehbewegungen **4a** und **4b** drehfest mit dem Messflansch **3c** und dem zweiten Teil der Kugelschale **3b** verbunden sind,
   wird die gekoppelte Drehbewegung zwischen Fuß und Unterschenkel einer Testpuppe, verursacht durch äußere Kräfte, in einzelne Drehbewegungen um die x- und y-Achse des gedachten Koordinatensystems, das im geometrischen Zentrum der Kugel **2** seinen Ursprung hat, aufgelöst.
   Weiterhin wird dadurch, dass
- die Kugel **2** in Wirkverbindung mit dem Messflansch **3c** und mit Mitteln zur Erfassung von Drehbewegungen **4a, 4b, 4c** steht,
die Drehbewegung des Fußes relativ zum Unterschenkel einer Testpuppe um die z-Achse des gedachten Koordinatensystems aus der gekoppelten Drehbewegung, verursacht durch äußere Kräfte, aufgelöst.

Die Übertragung einer relativen Drehbewegung des Fußes gegenüber dem Unterschenkel um die z-Achse des gedachten Koordinatensystems, das im geometrischen Zentrum der Kugel **2** seinen Ursprung hat, erfolgt ausgehend von der Kugel **2,** die mit dem Verbindungselement **1** drehfest verbunden ist, wobei das Verbindungselement **1** wiederum mit dem Fuß drehfest verbunden ist, über die Übertragungswelle **9** des Mittels zur Erfassung der Drehbewegungen **4b** um die x- oder y-Achse des gedachten Koordinatensystems, welches in der Bohrung **10** in dem Messflansch **3c** geführt ist und im rechten Winkel zueinander angeordnet sind, auf den Messflansch **3c.**

Für den Fall, dass die auf den Fuß einer Testpuppe wirkenden äußeren Kräfte ausschließlich eine relative Drehbewegung des Fußes gegenüber dem Unterschenkel um die z-Achse des gedachten Koordinatensystems, das im geometrischen Zentrum der Kugel **2** seinen Ursprung hat, verursachen, dient das Mittel zur Erfassung der Drehbewegungen **4b** um die x- oder y-Achse des gedachten Koordinatensystems, lediglich der Übertragung der relativen Drehbewegung des Fußes gegenüber dem Unterschenkel um die z-Achse des gedachten Koordinatensystems auf den Messflansch 3c.

### Bezugszeichenliste

- **A**: erfindungsgemäße Vorrichtung
- **B**: gemeinsame Achse der Kugelschale **3** und des Messflansches **3c** bzw. der zwei Teile der Kugelschale **3a, 3b** und des Messflansches **3c**
- **C**: dem Fuß der Testpuppe zugewandte Seite
- **D**: dem Unterschenkel der Testpuppe zugewandte Seite
- **1**: Verbindungselement
- **2**: Kugel
- **3**: Kugelschale
- **3a**: erster Teil der Kugelschale **3**
- **3b**: zweiter Teil der Kugelschale **3**
- **3c**: Messflansch
- **4a**: Mittel zur Erfassung von Drehbewegungen
- **4b**: Mittel zur Erfassung von Drehbewegungen
- **4c**: Mittel zur Erfassung von Drehbewegungen
- **5a**: Nut
- **5b**: Nut
- **6a**: Durchbruch
- **6b**: Durchbruch
- **7**: Abtastkopf
- **8**: Gehäuse der Mittel zur Erfassung von Drehbewegungen **4a** und **4b**
- **9**: Übertragungswellen der Mittel zur Erfassung von Drehbewegungen **4a** und **4b**
- **10**: Bohrung
- **10a**: Durchbruch
- **10b**: Bohrung
- **10c**: Befestigungsblock
- **10d**: Lagerring
- **11**: Durchbruch
- **12**: Winkelteilungen

## Patentansprüche

1. Vorrichtung **(A)** zur Erfassung der relativen Drehbewegungen des Fußes einer Testpuppe gegenüber dem Unterschenkel, bei welcher der Fuß über ein Verbindungselement **(1)** drehfest mit einer Kugel **(2)** verbunden ist,
- wobei die Kugel **(2)** in einer Kugelschale **(3)** dreh- und schwenkbeweglich gelagert ist,
- wobei die Kugelschale **(3)** aus zwei Teilen **(3a)** und **(3b)** zusammengesetzt ist,
- wobei der erste Teil der Kugelschale **(3a)** den oberen Abschnitt der Kugelschale **(3)** bildet und drehfest mit dem Unterschenkel der Testpuppe verbunden ist,
- wobei der zweite Teil der Kugelschale **(3b)** den unteren Abschnitt der Kugelschale **(3)** bildet und drehfest mit dem ersten Teil der Kugelschale **(3a)** verbunden ist,
- wobei ein Messflansch **(3c)** drehbeweglich den ersten Teil der Kugelschale **(3a)** umschließt,
- wobei die Kugel **(2)** mit zwei Nuten **(5a)** und **(5b)** versehen ist,
- wobei in die Nuten **(5a)** und **(5b)** Mittel zur Erfassung von Drehbewegungen **(4a)** und **(4b)** in Richtung des geometrischen Zentrums der Kugel **(2)** eingreifen,
- wobei der erste Teil der Kugelschale **(3a)** an seinem Umfang mit Durchbrüchen **(6a)** und **(6b)** versehen ist,
- wobei an dem ersten Teil der Kugelschale **(3a)** drehfest ein Abtastkopf **(7)** als Mittel zur Erfassung von Drehbewegungen **(4c),** angeordnet ist,
- wobei die Übertragungswelle **(9)** des Mittels zur Erfassung von Drehbewegungen **(4b)** in einer Bohrung **(10)** in dem Messflansch **(3c)** geführt ist,
- wobei die Übertragungswelle **(9)** des Mittels zur Erfassung von Drehbewegungen **(4a)** den Messflansch **(3c)** durch einen als Langloch ausgeführten Durchbruch **(10a)** durchdringt,
- wobei die Übertragungswelle **(9)** des Mittels zur Erfassung von Drehbewegungen **(4a)** in einer Bohrung **(10b)** in einem Befestigungsblock **(10c)** geführt ist,
- wobei der Befestigungsblock **(10c)** an einem Lagerring **(10d)** angeordnet ist,
- wobei der Lagerring **(10d)** mit dem zweiten Teil der Kugelschale **(3b)** drehfest verbunden ist,
- wobei das Gehäuse **(8)** des Mittels zur Erfassung von Drehbewegungen **(4b)** drehfest mit dem Messflansch **(3c)** verbunden ist,
- wobei das Gehäuse **(8)** des Mittels zur Erfassung von Drehbewegungen **(4a)** drehfest mit dem Befestigungsblock **(10c)** verbunden ist,
- wobei die Übertragungswellen **(9)** der Mittel zur Erfassung von Drehbewegungen **(4a)** und **(4b)** den ersten Teil der Kugelschale **(3a)** durch die am Umfang des ersten Teils der Kugelschale **(3a)** vorgesehenen Durchbrüche **(6a)** und **(6b)** durchdringen,
- wobei der zweite Teil der Kugelschale **(3b)** an der dem Fuß der Testpuppe zugewandten Seite **(C)** mit einem Durchbruch **(11)** versehen ist, den das Verbindungselement **(1)** durchdringt.

2. Vorrichtung nach Patentanspruch 1, wobei die zwei Teile **(3a)** und **(3b)** und der Messflansch **(3c)** auf einer gemeinsamen Achse **(B)** liegen.

3. Vorrichtung nach Patentanspruch 1 oder 2, wobei sich die Nuten **(5a)** und **(5b)** in Richtung des sich an der Kugel **(2)** anschließenden Verbindungselementes **(1)** über einen definierten Winkelbereich am Umfang der Kugel **(2),** bezogen auf ein gedachtes Koordinatensystem erstrecken, das im geometrischen Zentrum der Kugel **(2)** seinen Ursprung hat und im rechten Winkel zueinander angeordnet sind.

4. Vorrichtung nach Patentanspruch 1 bis 3, wobei die Mittel zur Erfassung von Drehbewegungen **(4a)** und **(4b)** im rechten Winkel zueinander angeordnet sind und formschlüssig in die Nuten **(5a)** und **(5b)** eingreifen.

5. Vorrichtung nach Patentanspruch 1 bis 4, wobei die Mittel zur Erfassung von Drehbewegungen **(4a)** und **(4b)** potentiometrische Drehwinkelsensoren sind, jeweils bestehend aus einem Gehäuse **(8)** und einer Übertragungswelle **(9).**

6. Vorrichtung nach Patentanspruch 1 bis 5, wobei sich die Durchbrüche **(6a)** und (6b) über einen Winkelbereich, in Bezug auf ein gedachtes Koordinatensystem, das im geometrischen Zentrum der Kugel **2** seinen Ursprung hat, am Umfang des ersten Teils der Kugelschale **(3a)** erstrecken und als Langlöcher ausgeführt sind.

7. Vorrichtung nach Patentanspruch 1 bis 6, wobei der Messflansch **(3c)** auf der dem Unterschenkel der Testpuppe zugewandten Seite **(D)** an seinem Außenumfang eine Anzahl regelmäßig verteilter Winkelteilungen **(12)** aufweist, die als optoelektronisch abtastbare Hell-Dunkel-Felder ausgeführt sind.

8. Vorrichtung nach Patentanspruch 1 bis 7, wobei der Abtastkopf **(7)** ein Winkel- oder Wegaufnehmer ist, der auf einem optoelektronischen Messprinzip basiert.

9. Vorrichtung nach Patentanspruch 1 bis 8, wobei der Abtastkopf **(7)** derart zu den Winkelteilungen **(12)** ausgerichtet ist, dass eine Abtastung der Winkelteilungen **(12)** und somit ein Rückschluss auf die relative Drehbewegung des Fußes einer Testpuppe gegenüber dem Unterschenkel um die gemeinsame Achse **(B)** der zwei Teile der Kugelschale **(3a, 3b)** und des Messflansches **(3c)** möglich ist.
